# EUROPEAN PATENT SPECIFICATION

(11) **EP 2 390 687 B1**
(45) Date of publication and mention of the grant of the patent: **07.10.2015**
(21) Application number: 10842845.9
(22) Date of filing: 18.01.2010
(51) Int. Cl.: G02B 5/128, B32B 5/16, B32B 37/24

(54) **REFLECTIVE MATERIAL AND METHOD OF MANUFACURE AND USE THEREOF**
REFLEKTIERENDES MATERIAL SOWIE VERFAHREN ZU SEINER HERSTELLUNG UND VERWENDUNG
MATÉRIAU RÉFLÉCHISSANT ET SON PROCÉDÉ DE FABRICATION ET D'UTILISATION

(30) Priority: 12.01.2010 CN 201020032939 U
(43) Date of publication of application: 30.11.2011
(73) Proprietor: Hsu, Ching-Hua, Taoyuan City 328 (TW)
(72) Inventor: Hsu, Ching-Hua, Taoyuan City 328 (TW)
(74) Representative: Chaillot, Geneviève
(86) International application number: PCT/CN2010/070234
(87) International publication number: WO 2011/085561

(56) References cited:
- EP-A1- 0 348 669
- WO-A1-2006/085690
- WO-A1-2009/091093
- CN-A- 101 380 834
- CN-Y- 2 593 592

## Description

### BACKGROUND OF THE INVENTION

### 1. Technical Field

The present invention relates to the structure, manufacturing method, and applications of a reflective material. More particularly, the present invention relates to a color reflective material having a composite layered structure made by a stacking process.

### 2. Description of Related Art

With the change of times, known reflective stickers have been unable to meet market demands. In order to provide a delicate color pattern on the surface of a reflective material, screen printing is typically used to print color inks on the surface of a glass bead layer according to consumer needs. However, the screen printing process is disadvantageous in that, while coating the glass beads with the color ink, the irregular surface of the glass bead layer makes it difficult to control the thickness of the ink coating and hence the thickness of the resultant color layer that is formed by the dried ink coating. As the glass bead layer is not evenly coated with the ink, the color layer is thinner on the raised portions of the glass bead layer and thicker on the recessed portions. Consequently, there is a marked difference between the reflections of normally and obliquely incident light, and the colors thus produced are not uniform.

Besides, for the safety of cycling at night, most cyclists would buy warning lights and install them on their bicycles. Alternatively, reflective strips, reflective stickers, or other reflective devices are attached to the bicycles to increase nighttime riding safety. These warning lights or reflective devices must be additionally provided on the bicycle frames and, due to their easy installation, are subject to loss and damage. Particularly, the thickness of such reflective strips or stickers tends to invite damage after the strips or stickers are used for a while, thus rendering the bicycles unsightly. Moreover, although the reflective stickers are highly visible at night, they can only be applied to certain portions of a bicycle and therefore only produce limited effects. See, also EP 348669.

### BRIEF SUMMARY OF THE INVENTION

It is an object of the present invention to overcome the aforesaid drawbacks of the prior art and provide a color reflective material as well as a manufacturing method and applications thereof.

A technical solution to achieving the above object lies in a color reflective material having a composite layered structure that includes a PET film, a PU layer, micro glass beads, another PU layer, a highly light-permeable color layer, an elastic PU layer, a metallic reflective layer, another elastic PU layer, and an adhesive layer sequentially stacked together.

The color reflective material in the foregoing solution is made in the following manner. First, a glass bead layer is provided on a surface layer, wherein the glass bead layer includes micro glass beads arranged on the surface layer. More specifically, the micro glass beads are bonded to the surface layer while being arranged thereon. The micro glass beads are transparent and hence light-permeable. Next, a PU layer is provided on the glass bead layer to fix the micro glass beads in position and increase the stability and compactness of the micro glass beads. Then, a highly light-permeable color layer is provided on the PU layer, wherein the highly light-permeable color layer is a color pattern printed on the PU layer by UV printing. Afterward, a metallic reflective layer is provided on the highly light-permeable color layer. The metallic reflective layer can reflect light that passes through the micro glass beads, thereby enhancing the brightness and color of the highly light-permeable color layer. Finally, an elastic PU layer and an adhesive layer are provided on the metallic reflective layer.

PU is the abbreviation of polyurethane.

PET is short for polyethylene terephthalate and is the most commonly used thermoplastic polyester nowadays.

The color reflective material proposed in the present invention is applicable to various products and fields that are required to reflect light, such as safety helmets, reflective clothes, reflective signs, and reflective thermal transfer films.

### BRIEF DESCRIPTION OF THE SEVERAL VIEWS OF THE DRAWINGS

A detailed description of further features and advantages of the present invention is given below with reference to the accompanying drawing, in which:

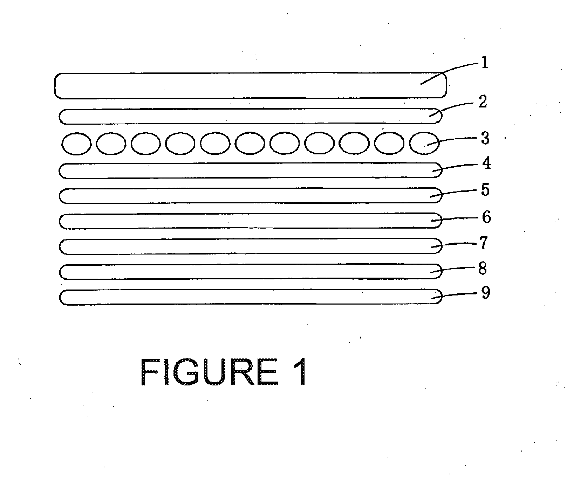

FIG. 1 is a schematic drawing showing the structure of the present invention.

### DETAILED DESCRIPTION OF THE INVENTION

Referring to FIG. 1, the present invention discloses a color reflective material having a composite layered structure. The disclosed reflective material includes a surface layer 1, a PU layer 2, micro glass beads 3, another PU layer 4, a highly light-permeable color layer 5, an elastic PU layer 6, a metallic reflective layer 7, another elastic PU layer 8, and an adhesive layer 9 sequentially stacked together.

To make such a reflective material, a PET film is used as the surface layer 1, and then a glass bead layer including the micro glass beads 3 is provided on the surface layer 1. The micro glass beads 3 are arranged on the surface layer 1 and bonded thereto by the PU layer 2, which is formed of PU. The micro glass beads 3 must be transparent so as to be light-permeable. Afterward, the PU layer 4 is provided on the glass bead layer. The PU layer 4 serves to fix the micro glass beads 3 in position and increase the stability and compactness of the micro glass beads 3. Next, the highly light-permeable color layer 5 is provided on the PU layer 4. More specifically, the highly light-permeable color layer 5 is a color pattern printed on the PU layer 4 by a UV printing process. Then, the metallic reflective layer 7 is provided on the highly light-permeable color layer 5. The metallic reflective layer 7 can reflect light so that, when light passes through the micro glass beads 3 and strikes the metallic reflective layer 7, the light is reflected to enhance the brightness and color of the highly light-permeable color layer 5. Following that, the resilient PU layer 8 and the adhesive layer 9 are sequentially provided on the metallic reflective layer 7.

The color reflective material of the present invention can be applied to various products and fields that are required to reflect light. For example, the present invention can be implemented as a reflective material layer and bonded to an object by a transfer printing technique that involves or does not involve film peeling. Besides, it is feasible to print different patterns on the surfaces of the PU layers, with a view to providing different visual effects. Also, the glass bead layer on the highly light-permeable color layer 5 can reflect light. Once the glass bead layer is bonded to the PU layer 4, the PU layer 4 can be directly bonded to the highly light-permeable color layer 5. Therefore, when the object to which the reflective material layer is bonded is curved, the color layer 5 can curve along with the object, thus allowing the color reflective material to be applied to objects with complicated curved surfaces.

The structure and the manufacturing process of the reflective material layer are described as follows. For example, the reflective material layer is bonded to an object by a transfer printing technique that involves peeling a film, wherein the film is used as the medium by which the reflective material layer is applied to the object. The PU layer 6 is printed with the highly light-permeable color layer 5, which in turn is spray-coated with the glass bead layer for reflecting light. The glass bead layer is coated with the PU layer 2, which is insoluble in the highly light-permeable color layer 5 and is, in this example, removable from the glass bead layer. Thus, the reflective material layer can be directly bonded, by transfer printing, to an object having small surface curvatures, thus reducing the overall thickness of the reflective material layer and the object.

The present invention is also applicable to safety helmets, reflective clothing, reflective signs, and so on.

## Claims

1. A reflective material having a composite layered structure, the reflective material comprising a PET film (1), a PU layer (2), micro glass beads (3), another PU layer (4), a highly light-permeable color layer (5), an elastic PU layer (6), a metallic reflective layer (7), another elastic PU layer (8), and an adhesive layer (9) sequentially stacked together.

2. A method for making a reflective material, comprising the steps of: providing a glass bead layer (3) on a surface layer (1), wherein the glass bead layer (3) comprises micro glass beads, and the micro glass beads are arranged on the surface layer (1) and bonded thereto; providing a PU layer (4) on the glass bead layer; providing a highly light-permeable color layer (5) on the PU layer, wherein the highly light-permeable color layer is a color pattern printed on the PU layer (4) by UV printing; providing a metallic reflective layer (7) on the highly light-permeable color layer (5); and providing an elastic PU layer (8) and an adhesive layer (9) on the metallic reflective layer.

3. The reflective material of claim 1, wherein the reflective material is applied to a safety helmet.

4. The reflective material of claim 1, wherein the reflective material is applied to reflective clothing.

5. The reflective material of claim 1, wherein the reflective material is applied to a reflective sign.

6. The reflective material of claim 1, wherein the reflective material is applied to a reflective sign.

## Patentansprüche

1. Reflektierendes Material mit einem zusammengesetzten Schichtaufbau, wobei das reflektierende Material eine PET-Folie (1), eine PU-Schicht (2), Mikroglaskugeln (3), eine weitere PU-Schicht (4), eine hoch lichtdurchlässige Farbschicht (5), eine elastische PU-Schicht (6), eine metallische reflektierende Schicht (7), eine weitere elastische PU-Schicht (8) und eine Klebstoffschicht (9) umfasst, die nacheinander gemeinsam übereinandergeschichtet sind.

2. Verfahren zum Herstellen eines reflektierenden Materials, das folgende Schritte umfasst: Bereitstellen einer Glaskugelschicht (3) auf einer Oberflächenschicht (1), wobei die Glaskugelschicht (3) Mikroglaskugeln umfasst und die Mikroglaskugeln auf der Oberflächenschicht (1) angeordnet und daran angeklebt sind; Bereitstellen einer PU-Schicht (4) auf der Glaskugelschicht; Bereitstellen einer hoch lichtdurchlässigen Farbschicht (5) auf der PU-Schicht, wobei die hoch lichtdurchlässige Farbschicht ein Farbmuster ist, das mittels UV-Druck auf die PU-Schicht (4) gedruckt ist; Bereitstellen einer metallischen reflektierenden Schicht (7) auf der hoch lichtdurchlässigen Farbschicht (5); und Bereitstellen einer elastischen PU-Schicht (8) und einer Klebstoffschicht (9) auf der metallischen reflektierenden Schicht.

3. Reflektierendes Material nach Anspruch 1, wobei das reflektierende Material auf einem Schutzhelm aufgebracht ist.

4. Reflektierendes Material nach Anspruch 1, wobei das reflektierende Material auf reflektierender Kleidung aufgebracht ist.

5. Reflektierendes Material nach Anspruch 1, wobei das reflektierende Material auf ein reflektierendes Schild aufgebracht ist.

6. Reflektierendes Material nach Anspruch 1, wobei das reflektierende Material auf ein reflektierendes Schild aufgebracht ist.

## Revendications

1. Matériau réfléchissant ayant une structure feuilletée composite, le matériau réfléchissant comprenant un film de PET (1), une couche de PU (2), des microbilles de verre (3), une autre couche de PU (4), une couche colorée (5) hautement perméable à la lumière, une couche de PU élastique (6), une couche réfléchissante métallique (7), une autre couche de PU élastique (8), et une couche adhésive (9) empilées ensemble de façon séquentielle.

2. Procédé de fabrication d'un matériau réfléchissant, comprenant les étapes consistant à : disposer une couche de billes de verre (3) sur une couche de surface (1), la couche de billes de verre (3) comprenant des microbilles de verre, et les microbilles de verre étant disposées sur la couche de surface (1) et liées à celle-ci ; disposer une couche de PU (4) sur la couche de billes de verre ; disposer une couche colorée (5) hautement perméable à la lumière sur la couche de PU, la couche colorée hautement perméable à la lumière étant un motif coloré imprimé sur la couche de PU (4) par impression UV ; disposer une couche réfléchissante métallique (7) sur la couche colorée (5) hautement perméable à la lumière ; et disposer une couche de PU élastique (8) et une couche adhésive (9) sur la couche réfléchissante métallique.

3. Matériau réfléchissant selon la revendication 1, dans lequel le matériau réfléchissant est appliqué sur un casque de sécurité.

4. Matériau réfléchissant selon la revendication 1, dans lequel le matériau réfléchissant est appliqué sur un vêtement réfléchissant.

5. Matériau réfléchissant selon la revendication 1, dans lequel le matériau réfléchissant est appliqué sur un panneau indicateur réfléchissant.

6. Matériau réfléchissant selon la revendication 1, dans lequel le matériau réfléchissant est appliqué sur un panneau indicateur réfléchissant.
